# EUROPEAN PATENT APPLICATION

(11) **EP 4 768 449 A1**
(43) Date of publication of application: **01.07.2026**
(21) Application number: 25227796.7
(22) Date of filing: 30.12.2025
(51) Int. Cl.: C02F 1/52, C02F 1/04, C02F 1/66, C02F 103/38

(54) **SYSTEM AND METHOD FOR PROCESSING EFFLUENTS CONTAINING EPOXY RESINS**

(30) Priority: 30.12.2024 PT 2024119960
(71) Applicant: Oprimee - Innovation Design Engineering Solutions, Lda, 3405-155 Oliveira do Hospital (PT)
(72) Inventor: DOS SANTOS ALMEIDA NUNES, João Miguel, 3405-155 OLIVEIRA DO HOSPITAL (PT)
(74) Representative: Patentree

(57) **Abstract**

The present disclosure relates to a system and a method for processing industrial effluents containing epoxy resins dispersed in an aqueous medium. The solution of the present disclosure allows the efficient separation of water, and resin and other constituents present in the effluent, using flocculation and evaporation, allowing water reuse. This method provides an efficient and sustainable solution for the treatment of industrial effluents, reducing environmental impact, chemicals consumption, and promoting the circular use of water resources and green technologies applied to efflluents containing epoxy resins. The flocculation stage is controlled by monitoring a parameter representative of the apparent viscosity of the effluent, so that the addition of acid is interrupted when a destabilisation threshold is reached, allowing the process to be automated and greater versatility in the face of possible variations in effluent composition resulting from production variations. The flocculated effluent is subsequently subjected to thermal evaporation at a temperature equal to or greater than 100 °C, whereby the water is selectively evaporated, condensed and recovered, while the epoxy resin and other non-volatile constituents remain in a solid residue. The method also avoids very costly processes with high maintenance and energy consumption, such as reverse osmosis, ultra and nano purification membranes.

## Description

### TECHNICAL FIELD

The present disclosure relates to a system and method for processing industrial effluents containing epoxy resins, specifically those generated in the manufacturing, application and disposal of products using these resins. Specifically, the system and the method of the present disclosure enable the removal, separation, and recovery of epoxy resins from effluents in an efficient manner, with the aim of minimizing the environmental impact and promoting sustainability in wastewater treatment.

### BACKGROUND

Epoxy resins are low-molecular-weight pre-polymers containing multiple epoxide groups. These thermosetting resins are cured through reactions with various curing agents, resulting in highly cross-linked networks. The specific properties of epoxy resins, such as their excellent mechanical strength, high adhesion, and resistance to heat and chemicals, make them ideal for applications like fiber-reinforced materials, adhesives, coatings, and encapsulating materials.

Due to their durability and versatility, epoxy resins are widely used in industries such as automotive, construction, electronics, and packaging. They are particularly common as heavy-duty anticorrosion coatings, for example, in metal cans and containers that protect against rust, especially for packaging acidic foods. Epoxy resins are also used in high-performance flooring applications, offering durability and aesthetic value in decorative finishes like terrazzo and colored aggregate flooring.

However, despite their beneficial properties, epoxy resins pose significant environmental challenges, particularly regarding waste disposal and the treatment of effluents containing these materials. The highly cross-linked and chemically resistant nature of epoxy resins makes them difficult to biodegrade or remove through traditional wastewater treatment processes. Conventional methods, such as biological treatment, chemical degradation, and physical filtration, often fail to effectively neutralize or eliminate epoxy resin components in industrial effluents.

As industries increasingly rely on epoxy resins, the need for more efficient and sustainable treatment methods for wastewater containing these substances is becoming critical. Current treatment techniques, such as incineration or the use of harsh chemical reagents, can be costly, environmentally damaging, and inefficient for large-scale effluent treatment.

Therefore, there is an urgent need to develop innovative, effective, cost-efficient, and scalable integrated solutions that can address the challenges of treating effluents containing epoxy resins, ensuring environmental protection while complying with stricter waste management regulations. Overall, it is required to comply with environmental regulations, ensure compatibility with existing wastewater treatment infrastructures, and minimize operational costs while maintaining scalability for industrial applications.

These facts are disclosed in order to illustrate the technical problem addressed by the present disclosure.

### GENERAL DESCRIPTION

The present disclosure relates to a system and a method of processing industrial effluents containing epoxy resins.

The system and method of the present disclosure offer sustainability in the epoxy resin industry by enabling the efficient reuse of treated water and the recovery of epoxy resin for recycling, thereby reducing environmental impact and conserving resources.

The system can be integrated with existing industrial setups or other processing units.

An aspect of the present disclosure relates to a system for the treatment of industrial effluents containing epoxy resins comprising:
a reception tank for collecting the effluent;
a reactor for adding and controlling the flocculant agent, namely a strong inorganic acid, such as hydrochloric acid (HCl);
a mechanical agitation system in the reactor to promote flocculation;
a thermo-evaporator equipped with a heating system to separate water from epoxy resins and other constituents;
a condensation tank connected to the thermo-evaporator for recovering evaporated water;
a heat exchanger for ensuring equal water levels between the condensation tank and the liquid water tank;
a filtration system for removing particles from the water;
a float valve for monitoring and controlling the water levels for reuse.

In an embodiment, the hydrochloric acid (HCl) concentration ranges from 2 to 5 ppm, and although concentrations above 5 ppm can be used, they do not have relevance in the process efficiency.

In an embodiment, the reactor may be further equipped with a frequency converter that adjusts the motor operation according to the effluent viscosity, ensuring optimal energy consumption during the flocculation process.

In an embodiment, the thermo-evaporator may be equipped with a heating jacket system that maintains an internal temperature above 105 °C, assuring water evaporation, allowing the physical separation of water from solid epoxy resin and other constituents.

In an embodiment, the evaporated water may be directed to a condensation tank, where it is cooled and condensed back into liquid state for recovery and reuse.

In an embodiment, the condensation tank may be connected to a heat exchanger, allowing heat transfer between the condensed water and liquid water, ensuring equal water levels between both tanks for efficient operation.

In an embodiment, the condensed water may be further filtrated by a filtration method, such as activated carbon filter or other, to ensure that no particles accumulate in either the condensation tank or the heat exchanger tank.

In an embodiment, the system comprises a float valve or similar device placed in the heat exchanger tank to monitor water levels, releasing water for reuse when the predetermined level is reached.

Another aspect of the present disclosure relates to a method for processing industrial effluents containing epoxy resins comprising the following steps:
providing an effluent that contains epoxy resin, water, and other constituents;
introducing the effluent into a reception tank;
transferring the effluent from the reception tank to a reactor;
adding a controlled volume of hydrochloric acid (HCl) as a flocculant agent to the effluent in the reactor;
agitating mechanically the effluent in the reactor to promote the formation of aggregates, thereby causing flocculation and increasing the viscosity of the mixture;
monitoring the viscosity of the mixture and stopping the addition of HCl when the viscosity reaches a threshold, ensuring process efficiency and safety;
transferring the flocculated effluent to a thermo-evaporator for physical separation of water from epoxy resin and other constituents through phase change;
recovering the water.

An aspect of the present disclosure relates to a system for processing an effluent containing epoxy resin, comprising:
a reception tank (1) configured to collect the effluent;
a reactor (2) linked to a reception tank (1);
a container (3) containing a flocculant agent;
a dosing pump (4) linked to the container (3) and the reactor (2), wherein the dosing pump (4) is configured to introduce a controlled volume of the flocculant agent from the container (3) into the reactor (2);
a mechanical agitator (5) positioned within the reactor (2);
a control box (6) configured to control the mechanical agitator by measuring the viscosity (5);
a guillotine/gate valve (7) with seals at the basis of the reactor (2) configured to self-cleaning;
a thermo-evaporator (8) linked to the guillotine/gate valve (7) configured to separate the water from the epoxy resin and other effluent components;
a heating system (9) positioned around the thermo-evaporator (8) for water evaporation;
a unit combining a gravity discharge outlet (10) to allow the flow of separated components and effluent residues from the system by the force of gravity and a vertical outflow (11) for gas exit linked at the end of the thermo-evaporator (8);
a condensation tank (12);
an extraction fan (13) linked to the vertical outflow (11) and the condensation tank (2);
a spray system (14) positioned within the condensation tank (12) configured for water recovery;
a heat exchange tank (15) for thermal transmission;
a first conduit (16) linking the condensation tank (12) and the heat exchange tank (15) to ensure the balance of water levels, supporting both temperature regulation and continuous condensation;
a water recirculating pump (17) between the condensation tank (12) and the heat exchange tank (15);
a second conduit (18) linked to the condensation tank (12);
a filtration unit (19) linked to the condensation tank (12) through the second conduit (18);
a float valve (20) within the heat exchange tank (15) that monitors the water levels.

An aspect of the present disclosure relates to a system for processing an effluent containing epoxy resin, comprising: a reception tank (1) configured to collect the effluent; a flocculation reactor (2) linked to the reception tank (1); a container (3) containing a flocculant agent; a dosing pump (4) linked to the container (3) and the reactor (2), wherein the dosing pump (4) is configured to introduce the flocculant agent from the container (3) into the reactor (2); a mechanical agitator (5) positioned within the reactor (2); a control unit box (6) configured to control the mechanical agitator by measuring the viscosity (5); a guillotine/gate valve (7) with seals at the basis of the reactor (2) configured to self-cleaning and discharge, arranged at the bottom of the reactor (2); a thermo-evaporator (8) linked to the guillotine/gate valve (7) configured to separate the water from the epoxy resin and other effluent components; a heating system (9) positioned around the thermo-evaporator (8) for water evaporation; a unit combining a gravity discharge outlet (10) and a vertical outflow (11) for gas exit linked at the end of the thermo-evaporator (8); a vapour conveying system (11) connected to a condensation tank (12); a condensation tank (12), with a condensation system for recovering water; an extraction fan (13) linked to the vertical outflow (11) and the condensation tank (12); a spray system (14) positioned within the condensation tank (12) configured for water recovery; a heat exchange tank (15) for thermal transmission; a first conduit (16) connected to the condensation tank (12) and the heat exchange tank (15) to ensure the balance of water levels; a water recirculating pump (17) between the condensation tank (12) and the heat exchange tank (15); optionally, a second conduit (18) linked to the condensation tank (12); optionally, a filtration unit (19) linked to the condensation tank (12) through the second conduit (18); a float valve (20) within the heat exchange tank (15) that monitors the water levels, wherein the system is configured to automatically stop the addition of the flocculating agent when the viscosity-representative parameter reaches a predefined threshold corresponding to loss of colloidal stability of the epoxy resin, without inducing chemical curing of the resin.

In an embodiment, the flocculant agent may be an acid; preferably strong inorganic acid, acting as a colloidal destabilisation trigger rather than as a curing agent for the epoxy resin.

In an embodiment, the flocculant agent may be selected from a list consisting of: hydrochloric acid (HCl), sulfuric acid (H₂SO₄), and nitric acid (HNO₃); preferably hydrochloric acid (HCl).

In an embodiment, the flocculant agent concentration may range from 1-10 ppm; preferably 2-8 ppm; more preferably 2-5 ppm, corresponding to a colloidal destabilisation threshold of the epoxy resin dispersion.

In an embodiment, the flow rate of the flocculant agent may range from 0.1 L/h to 10000 L/h; preferably 10 L/h to 500 L/h, wherein the control unit (6) is configured to interrupt dosing of the flocculating agent when the viscosity-representative parameter increases by 50% to 120% relative to a baseline value measured prior to acid addition.

In an embodiment, the interval of speed of the mechanical agitator may range from 5 rpm to 10000 rpm.

In an embodiment of the present disclosure, the effluent comprises:
0.1-15 % (w/w) of a dispersed epoxy resin and/or epoxy oligomers;
70-99 % (w/w) of water;
0-10 % (w/w) of organic solvents;
a turbidity ranging from 1000 - 5 000 NTU;
a chemical oxygen demand ranging from 8 000 - 25 000 mg O₂/L;
200 - 2 000 mg/L of suspended solids;
500 - 5 000 mg/L of oils and/or resins;
a viscosity ranging from 20 - 50 mPa·s;
a conductivity ranging from 0.5-10 mS/cm; and
wherein the effluent is dispersed in colloidal or emulsified form.

In an embodiment, the flow rate of flocculated effluent from the reactor (2) to the thermo-evaporator (8) may range from 0.1 m³/h to 500 m³/h; preferably 100 m³/h to 500 m³/h.

In an embodiment, the temperature of the heating system is at least 100 °C; preferably 105 °C, thereby selectively evaporating water while retaining epoxy resin and other non-volatile constituents.

In an embodiment, the temperature of flocculation ranges from 15-35 °C; preferably 15-45 °C.

In an embodiment, the recovered water has a reduction of at least 4 log₁₀ in microbial count compared to the effluent; wherein the microbial count is determined based on one or more heterotrophic plate count, total coliforms, *Escherichia coli, Enterococcus spp, or Pseudomonas aeruginosa.*

An aspect of the developed technology is that flocculation of the epoxy resin results exclusively from physical mechanisms comprising surface charge neutralisation, electrical double-layer compression and demulsification, without formation of covalent bonds between polymer chains.

An aspect of the present disclosure relates to a method for processing an effluent containing epoxy resin, comprising the steps:
providing the effluent;
introducing the effluent into the reception tank (1);
transferring the effluent from the reception tank (1) to the reactor (2);
adding the flocculant agent to the effluent in the reactor (2), until the viscosity increases at least 50% and up to 120% relative to an initial baseline value;
agitating mechanically the effluent and the flocculant agent in the reactor (2), causing flocculation and increasing the viscosity of the mixture;
monitoring the viscosity of the mixture by the control box (3) when the viscosity increases due to flocculation, the motor exerts more effort, which signals the system to close the dosing pump (4), stopping the addition of the flocculating agent;
stopping the addition of the flocculant agent when the desired viscosity is reached;
transferring the flocculated effluent to a thermo-evaporator for physical separation of water from epoxy resin and other constituents through water evaporation;
recovering the epoxy resin and other components trough the gravity discharge outlet (10);
transferring the gaseous effluent to the condensation tank (12) via the vertical outflow (11);
condensating the water in the condensation tank (12)
controlling the water levels and condensation process in the heat exchange tank (15);
filtrating the condensated water in the filtration unit (19);
recovering of the water via the float valve for reuse; and
wherein epoxy resin is not detectable in the recovered water by gravimetric analysis.

In an embodiment, the water pH may be from 2-10; preferably 3-6; more preferably 4-5.

In an embodiment, the bulk pH of the effluent is not used in the method as the primary control variable for the flocculation step. Instead, control is made through viscosity.

In an embodiment, the percentage of water recovered may be 10-100%; preferably 10-50%; more preferably 50-95%%, wherein epoxy resin is not detectable in the recovered water by gravimetric analysis.

Another aspect of the present disclosure relates to the use of the water obtained by the method of the present disclosure as irrigation water.

### BRIEF DESCRIPTION OF THE DRAWINGS

The following figures provide preferred embodiments for illustrating the disclosure and should not be seen as limiting the scope of invention.

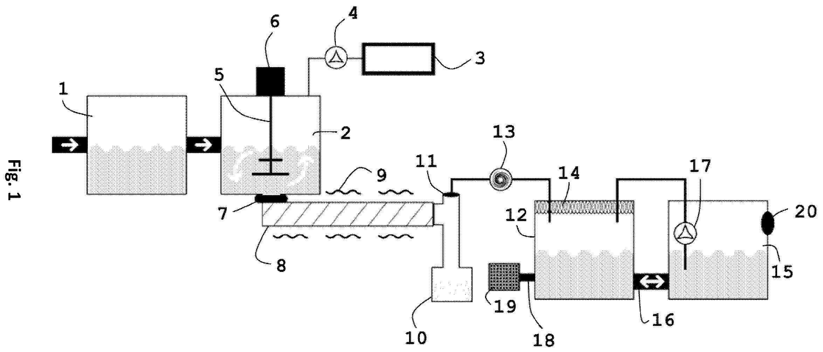

**Figure 1****:** Schematic representation of the system and method of processing the effluents containing epoxy resin.

### DETAILED DESCRIPTION

The present disclosure relates to a system and a method for processing effluents contaminated with epoxy resins.

The present disclosure relates to a system and a method for processing industrial effluents containing epoxy resins. The solution of the present disclosure allows the efficient separation of water, and resin and other constituents present in the effluent, using flocculation and evaporation, allowing water reuse. This method provides an efficient and sustainable solution for the treatment of industrial effluents, reducing environmental impact and promoting the circular use of water resources.

In an embodiment, briefly, the effluents contaminated with epoxy resins are received in a reception tank, followed by processing in three main phases: addition of a flocculant, evaporation, and water condensation. The method involves the use of a strong acid, such as hydrochloric acid (HCl) in the reactor to separate water and epoxy resin, water evaporation in a thermo-evaporator, and the purification and recirculation of water.

In an embodiment, the epoxy resin present in an aqueous industrial effluent is not dissolved at a molecular level, but occurs predominantly in a colloidal or dispersed form. Such colloidal epoxy material may comprise epoxy resin droplets forming an unstable emulsion, partially hydrolysed epoxy oligomers, and/or particulate epoxy material coated with surface functional groups, including hydroxyl (-OH) groups, ether groups, and residual amines or surfactants originating from industrial processing. Under neutral to mildly alkaline pH conditions, said colloidal epoxy particles exhibit an effective surface charge, typically expressed as a slightly negative zeta potential, which confers electrostatic stability and prevents spontaneous aggregation or sedimentation.

In a preferred embodiment, the addition of a strong inorganic acid to the aqueous effluent does not result in chemical curing or covalent crosslinking of the epoxy resin. Strong inorganic acids, such as hydrochloric acid, sulfuric acid or nitric acid, act solely as proton donors and do not function as epoxy curing agents.

The formation of a covalently crosslinked epoxy network requires bifunctional nucleophilic curing agents, such as amines, anhydrides or thiolates, which are absent or rendered inactive under the conditions of the process. Accordingly, the acid treatment does not induce polymerisation, network formation, or irreversible gelation of the epoxy resin.

In one embodiment, flocculation of the epoxy resin is achieved through the combined action of several physico-chemical mechanisms triggered by controlled acidification of the effluent. In a first mechanism, partial protonation of surface functional groups occurs when the pH is lowered into a mildly acidic range, preferably between pH 4 and pH 5. Protonation of hydroxyl and ether groups leads to neutralisation of surface charges and a sharp reduction of the absolute zeta potential towards zero, thereby destabilising the colloidal system. In a second mechanism, the increased ionic strength resulting from the presence of hydrogen ions and corresponding counter-ions compresses the electrical double layer surrounding the colloidal particles. This compression of the Debye layer reduces electrostatic repulsion and increases the probability of effective particle collisions. In a third mechanism, residual emulsifying agents, such as amines or surfactants, are protonated under acidic conditions and thereby lose their stabilising function, leading to acid-induced demulsification of the epoxy dispersion. In a fourth mechanism, once electrostatic stabilisation is lost, the intrinsically hydrophobic character of the epoxy resin becomes dominant, and van der Waals interactions promote coalescence and aggregation, resulting in the formation of dense, viscous flocs.

In a preferred embodiment, the process is operated within a defined chemical stability window in which the epoxy resin remains structurally intact. Preferably, the acid is dosed at a concentration in the order of a few parts per million, more preferably between 2 and 5 ppm, resulting in a final pH of between 4 and 5 at ambient temperature. Under these conditions, no significant acid-catalysed opening of the epoxy ring occurs, no relevant hydrolysis of the polymer backbone is observed, and no curing reaction takes place. The epoxy resin is therefore aggregated in a purely physical manner and remains chemically recoverable. Conditions known to induce chemical degradation of epoxy resins, such as pH values below 1, prolonged residence times, elevated temperatures, or the presence of catalytic organic acids, are outside the scope of the claimed process.

In one embodiment, the flocculation process proceeds under perikinetic and/or orthokinetic aggregation regimes, depending on particle concentration, mixing intensity and the extent of zeta potential reduction. The aggregation rate increases as the electrostatic repulsion decreases under acidic conditions. Practically, the progression of flocculation may be detected indirectly by a measurable increase in apparent viscosity, an increase in agitator torque, or increased motor load in the mixing system. Such parameters allow real-time kinetic control of the process and enable termination of acid dosing once the desired degree of flocculation is achieved, thereby preventing over-acidification.

In another embodiment, the process is characterised by a clear and unequivocal distinction between physical flocculation and chemical gelification. The aggregates formed consist of physically associated epoxy particles held together by non-covalent interactions and are at least partially reversible. In contrast, epoxy gelification involves covalent crosslinking, is irreversible, typically requires curing agents and elevated temperatures, and results in a three-dimensional polymer network. The viscosity increase observed in the present disclosure is attributable to physical percolation of flocs rather than chemical gel formation, and the aggregated resin remains recoverable.

In an embodiment, the process conditions inherently suppress any risk of epoxy gelification. Strong acids protonate residual amines, thereby deactivating them as potential curing agents. The process further employs short residence times, ambient temperature, and automatic control based on rheological or mechanical indicators. In the absence of bifunctional curing agents and under the controlled acidic conditions described, gelification is both thermodynamically and kinetically unfavourable.

In an embodiment, jar-test or pilot-scale experiments demonstrate that acid dosing of 2-5 ppm hydrochloric acid to an effluent with an initial pH of approximately 7.2 results in a final pH of about 4.5 and induces visible flocculation within 1 to 5 minutes. Turbidity reductions exceeding 95% may be observed, together with a viscosity increase of one to two orders of magnitude. Furthermore, zeta potential measurements show a reduction from values around -25 mV to values close to -2 mV. More than 90% of the epoxy resin may be recovered on a dry matter basis.

In an embodiment, analytical characterisation by FTIR spectroscopy shows no new absorption bands associated with epoxy curing, differential scanning calorimetry confirms the absence of curing exotherms, and rheological analysis indicates pseudoplastic behaviour rather than gel-like response, thereby confirming physical aggregation rather than chemical reaction.

Accordingly, the acid-induced flocculation of epoxy resins as described herein results from controlled destabilisation of a colloidal system via surface charge neutralisation, electrical double-layer compression and loss of emulsifying agents, leading to rapid and controllable physical aggregation of the resin without chemical curing or structural degradation.

In an embodiment, the strong acid is not used to acidify or neutralise the entire volume of the aqueous effluent in a stoichiometric manner. Instead, the acid acts as a trigger for destabilising a colloidal or emulsified dispersion of epoxy resin present in the effluent. In particular, the technical function of the acid is to induce demulsification and electrostatic destabilisation of resin particles or droplets, resulting in loss of colloidal stability and rapid aggregation. Accordingly, the required acid concentration is governed by a threshold phenomenon related to colloidal stability, rather than by the alkalinity or buffering capacity of the bulk liquid.

In a preferred embodiment, the response of the effluent to incremental acid addition is non-linear. Below a critical concentration of acid, the dispersion remains substantially stable, exhibiting low viscosity and high turbidity. Once a threshold concentration is reached, a rapid transition occurs, characterised by abrupt aggregation of epoxy resin particles, a sharp increase in apparent viscosity, and a pronounced decrease in turbidity. This threshold behaviour is consistent with mechanisms of surface charge neutralisation, collapse of the electrical double layer, protonation and inactivation of stabilising agents, and subsequent hydrophobic aggregation. Beyond said threshold, further acid addition yields only marginal improvements in separation efficiency.

In an embodiment, the strong acid is added in concentrations in the low parts-per-million range, preferably between 1 and 10 ppm, more preferably between 2 and 5 ppm, expressed as acid equivalent.

Experimental observations demonstrate that such concentrations are sufficient to induce the destabilisation threshold of the epoxy resin dispersion, despite causing only limited changes in the bulk pH of the effluent. This confirms that the process does not rely on global acidification of the effluent, but rather on local and interfacial physico-chemical effects governing colloidal stability.

In an embodiment, jar-test or pilot-scale experiments are performed in which the acid concentration is progressively increased while monitoring physico-chemical parameters of the system. Plots of acid concentration versus apparent viscosity, turbidity, or degree of phase separation exhibit a characteristic sigmoidal or step-like response, with a clear inflection point corresponding to the destabilisation threshold. The viscosity increases by one or more orders of magnitude within a narrow concentration window, while turbidity decreases sharply, confirming rapid aggregation and removal of epoxy resin from the aqueous phase.

In an embodiment, the process comprises monitoring the apparent viscosity of the effluent indirectly via the mechanical load, torque, or electrical consumption of a mixing device. As aggregation progresses, the formation of a flocculated network increases the resistance to mixing, which is detected as an increase in agitator torque or motor current. The acid dosing is automatically interrupted when a predefined torque or viscosity threshold is reached. This control strategy ensures that only the minimum amount of acid required to induce flocculation is consumed, independently of variations in effluent composition, buffering capacity or initial pH.

In an embodiment, bulk pH is not used as the primary control variable for the flocculation step since effective flocculation may occur with only a minor change in bulk pH, particularly in buffered or high-alkalinity effluents.

In an embodiment, the decisive parameter is the loss of colloidal stability, which may occur at micro-interfaces and on particle surfaces without requiring homogeneous acidification of the entire aqueous phase. Consequently, the process remains effective even when the final bulk pH after acid addition remains above strongly acidic values.

In an embodiment, the effluent prior to treatment exhibits high turbidity, elevated chemical oxygen demand, and a significant concentration of extractable oils or epoxy resins, present in dispersed or emulsified form.

In an embodiment, following acid-induced flocculation, the epoxy resin is concentrated into a thickened, flocculated phase, while the supernatant aqueous phase exhibits a substantial reduction in turbidity and suspended solids. The overall viscosity of the system increases markedly, facilitating retention of the resin-rich phase during subsequent processing steps.

In a representative experimental embodiment, a response curve was established by jar testing and/or pilot-scale testing using an aqueous effluent containing dispersed epoxy resin in the form of droplets and/or particles, and further comprising residual surfactants and/or residual amines acting as dispersion stabilisers. The tests were conducted at a temperature of 20-25 °C under controlled agitation conditions, for example with an equivalent mixing intensity corresponding to about 200-400 rpm. Progressive doses of hydrochloric acid (HCl), expressed as acid equivalent concentration relative to the effluent volume, were added stepwise while monitoring bulk pH, turbidity and apparent viscosity, and while recording qualitative visual observations.

**Table 1 - Representative dose-response dataset illustrating the non-linear "threshold" behaviour of the system.**

| **HCl (ppm)** | **Bulk pH** | **Turbidity (NTU)** | **Viscosity (mPa·s)** | **Visual observation** |
|---|---|---|---|---|
| 0 | 7.2 | 3,000 | 25 | stable dispersion |
| 1 | 7.0 | 2,800 | 28 | no floc formation |
| 2 | 6.6-6.8 | 1,200 | 60 | onset of coalescence |
| 3 | 6.2-6.5 | 250 | 350 | dense flocs (threshold) |
| 4 | 6.0-6.3 | 120 | 650 | complete flocculation |
| 5 | 5.8-6.2 | 100 | 800 | marginal gain |

As depicted in **Table 1,** a pronounced transition is observed in the concentration window of about 3-5 ppm HCl, in which turbidity decreases sharply and viscosity increases abruptly, consistent with rapid destabilisation of the epoxy resin dispersion and formation of dense flocs. Above approximately 5 ppm HCl, further improvements become marginal, indicating a plateau region and supporting the technical rationale for limiting acid consumption to the lowest effective threshold range. The bulk pH of the effluent may not reach values as low as pH 4-5 when only 2-5 ppm acid is added, particularly for buffered or high-alkalinity effluents. In this embodiment, the decisive factor governing flocculation is the threshold of colloidal stability (e.g., charge neutralisation/double-layer collapse and demulsification), rather than stoichiometric acidification of the entire volume. A bulk pH of 4-5 may nonetheless be observed in the condensate/recovered water, in low-alkalinity effluents, and/or after optional fine pH adjustment, while the physical separation of the epoxy resin is already induced at the low-dose threshold.

In a preferred embodiment, the flocculated effluent is subjected to thermoevaporation at temperatures equal to or above 105 °C. Under these conditions, only the water undergoes a phase change and is evaporated, while the epoxy resin and other non-volatile constituents remain in the residue.

In an embodiment, the concentrated resin phase, including large flocs or agglomerates, is effectively retained within the evaporator and discharged by gravity or mechanical conveying. The recovered condensate exhibits low turbidity, low suspended solids and substantially reduced organic load.

In an embodiment, the thermoevaporation system comprises a mechanically driven conveying or scraping mechanism, such as a screw or drag system, which allows efficient handling of resin agglomerates having dimensions significantly larger than those typically manageable in conventional filtration systems. This configuration ensures reliable heat transfer and prevents clogging or blockage, even in the presence of flocs or agglomerates exceeding several centimetres in size.

Surprisingly, the process demonstrates that extremely low concentrations of strong acid are sufficient to induce controlled flocculation of epoxy resins dispersed in aqueous effluents. The acid functions as a destabilisation trigger rather than a stoichiometric reagent, and the process exploits a threshold-driven transition in colloidal stability. This enables efficient resin separation, reduced chemical consumption, improved operational safety, and robust performance across a wide range of effluent compositions.

In an embodiment of the present disclosure, epoxy resin-containing effluents exhibit a reproducible threshold response to minimal acid addition, which can be detected and controlled via viscosity-related parameters. This insight allows the combination of low-dose acid flocculation with subsequent thermoevaporation to achieve efficient water recovery without aggressive chemical treatment, thereby constituting a distinct and advantageous technical solution.

In an embodiment, the flocculation step is controlled using viscosity-related parameters as the primary process variable. The viscosity of the medium in the flocculation reactor governs (i) the aggregation kinetics, (ii) the stopping point for acid dosing, and (iii) pumpability and discharge behaviour towards the thermoevaporator.

In an embodiment, the progression of flocculation is monitored preferably by an industrial proxy measurement, namely the torque, motor current or power consumption of the agitator measured via a frequency converter or motor drive. In this embodiment, a baseline mechanical load is recorded before acid dosing and an acid dosing stop criterion is defined as a relative increase in torque (or motor current) compared to said baseline. Preferably, the dosing stop criterion corresponds to an increase of about +50% to +120% relative to the initial value, thereby indicating the onset of a flocculated network and a stable thickened phase while preventing overdosing.

In a representative experimental embodiment, physico-chemical parameters of an epoxy resin-containing aqueous effluent were measured before treatment, after acid-induced flocculation, and after subsequent thermoevaporation, condensation and filtration. The values reported below are representative and technically coherent ranges observed during operation of the process.

### Raw effluent (upstream of the flocculation reactor)

In an embodiment, the untreated effluent exhibited the following characteristics:
Chemical oxygen demand (COD): 8,000-25,000 mg/L
Turbidity: 1,000-5,000 NTU
Extractable oils/resins: 500-5,000 mg/L
Total suspended solids (TSS): 200-2,000 mg/L
Conductivity: 0.5-5 mS/cm
Bulk pH: variable, typically 6-9

These values are consistent with effluents containing epoxy resins in dispersed or emulsified form together with auxiliary substances and process residues.

In another embodiment, following addition of a strong acid in an extremely low dose range and controlled flocculation:
Turbidity in any separable aqueous supernatant was reduced by approximately 80-95%;
Global viscosity of the medium increased by a factor of about 10 to 50 relative to the raw effluent;
Epoxy resin was concentrated into dense flocs, facilitating retention and handling in the downstream thermoevaporation step.

These results demonstrate that minimal acid addition is sufficient to immobilise the resin into a heavy, flocculated phase.

In another embodiment, the condensed and filtered water exhibited:
Turbidity below about 5-20 NTU, depending on the filtration medium;
TSS below about 10-30 mg/L;
Chemical Oxygen Demand (COD) typically reduced by more than 80-95%, depending on the fraction of volatile organic compounds present;
pH typically in the range of 4-7, adjustable if required;
Epoxy resin and other non-volatile constituents not detected in the recovered water, as they do not accompany the water vapour and remain in the solid residue.

In a representative embodiment, the physico-chemical parameters of an epoxy resin-containing aqueous effluent were characterised at three stages of the process, namely: (i) raw effluent prior to treatment, (ii) after acid-induced flocculation in the reactor, and (iii) recovered water obtained after thermoevaporation, condensation and filtration. The results are summarised in **Table 2.**

**Table 2 - Characterisation of the effluent and the recovered water.**

| **Parameter** | **Effluent** | **After flocculation (reactor)** | **Recovered water (condensate)** |
|---|---|---|---|
| pH | 6.5 - 8.5 | 5.5 - 6.5 | 4.0 - 6.0 |
| Turbidity (NTU) | 1,000 - 5,000 | < 300 | < 10 - 20 |
| COD (mg O₂/L) | 8,000 - 25,000 | 3,000 - 8,000 | < 500 - 1,000 |
| Suspended solids (mg/L) | 200 - 2,000 | concentrated in flocs | < 10 - 30 |
| Oils / resins (mg/L) | 500 - 5,000 | > 90% retained | below detection limit |
| Viscosity (mPa·s) | 20 - 50 | 300 - 1,000 | ^{~}1 |
| Physical state | dispersion/emulsion | thickened phase | clear water |

As depicted in **Table 2,** following acid-induced flocculation, the epoxy resin and other non-volatile constituents are effectively immobilised in a thickened, flocculated phase, while the subsequent thermoevaporation step selectively removes water by phase change. As a result, the recovered condensate exhibits low turbidity, low suspended solids, substantially reduced Chemical Oxygen Demand (COD), and no detectable epoxy resin.

These results support the conclusion that flocculation at minimal acid dosage is sufficient to trap epoxy resin in a heavy phase, while the subsequent phase change of water enables near-complete physical separation.

In an embodiment, it was experimentally observed that the acid flocculant exhibits a threshold-dose behaviour. Incremental addition of a strong acid at very low concentrations, typically between 1 and 10 ppm, preferably between 2 and 5 ppm, induces an abrupt transition in the colloidal stability of the epoxy resin-containing effluent. This transition is evidenced by: a rapid decrease in turbidity; and a pronounced increase in viscosity and/or agitator torque. The effect results from electrostatic destabilisation and demulsification of resin particles or droplets and does not require stoichiometric acidification of the entire effluent volume. Acid dosing is interrupted when the viscosity-related parameter reaches a predefined plateau, thereby optimising reagent consumption and operational safety.

Subsequently, thermoevaporation at a temperature of at least 105 °C promotes exclusive phase change of the water, allowing recovery of the water by condensation while epoxy resin and other non-volatile constituents remain in the solid residue, which is discharged by gravity.

In a preferred embodiment, the thermoevaporator comprises a screw-type drag or conveying system, enabling reliable operation even in the presence of large agglomerates, including agglomerates having dimensions exceeding 80 mm, without clogging or blockage, while maintaining effective heat transfer for water-resin separation.

In an embodiment, the reactor contents exhibit a non-linear rheological response upon incremental acid addition. Below the destabilisation threshold, the mixture remains relatively fluid and exhibits only minor changes in torque or viscosity; once the threshold is reached, a rapid rise in viscosity and torque is observed due to formation of a percolating physical network of epoxy flocs.

In this embodiment, the control algorithm of the dosing system comprises: (a) continuously reading motor current or torque, (b) calculating a moving average or slope of the signal to detect a rapid increase, and (c) stopping or reducing acid dosing when either (i) a predetermined absolute signal value is reached, or (ii) the derivative of the signal exceeds a predetermined limit indicative of sudden thickening. This approach provides robust control independent of bulk pH and effluent buffering capacity.

In an embodiment, the flocculation reactor is operated at a temperature within 15 to 35 °C, more preferably 18 to 30 °C. An upper temperature limit below 45-50 °C is preferably maintained to reduce solvent volatilisation, to avoid unpredictable rheological changes, and to minimise the risk of undesired side reactions. Temperature is measured by one or more probes (e.g., PT100 or thermocouple) positioned in the reactor volume and optionally in inlet and outlet lines.

In an embodiment, the thermoevaporator is operated at an internal temperature equal to or above 100 °C, more preferably at or above 105 °C, for continuous evaporation of water while retaining non-volatile resin and solids in the residue. The thermoevaporator temperature may be controlled via jacket heating, internal heater elements, or heat exchanger loops and is monitored by one or more temperature sensors located in the heating circuit and/or in the process chamber.

In an embodiment, the process comprises controlling the hydraulic parameters of the plant, including feed flow rate (m³/h), reactor residence time, discharge flow rate to the evaporator, and acid dosing flow rate (L/h). Preferably, the flocculation reactor residence time is within 2 to 20 minutes, more preferably 5 to 10 minutes, which provides sufficient time for destabilisation and aggregation while limiting over-thickening. In continuous or semi-continuous operation, the discharge flow rate to the thermoevaporator is adjusted to maintain stable transport of the thickened phase and to prevent slugging of solids.

In a preferred embodiment, the acid dosing flow rate is controlled by a pump (e.g., diaphragm or peristaltic pump) with feedback control based on torque/viscosity signals, such that dosing is reduced or stopped when the viscosity threshold is reached.

In an embodiment, the incoming effluent is characterised by a composition that may vary within defined intervals, thereby supporting reproducibility across industrial conditions. The effluent may comprise, by mass: water in an amount of 70-99%; dispersed epoxy resin and/or epoxy oligomers in an amount of 0.1-15%; organic solvents (e.g., acetone, isopropanol, MEK) in an amount of 0-10%; residual additives, surfactants and/or amines in trace amounts up to about 1%; and solids or fillers (e.g., silica, calcium carbonate, pigments) in an amount of 0-5%. Typical pH values may range from 5 to 9 and conductivity may range from 0.5 to 10 mS/cm.

In a preferred embodiment, the effluent is further characterised by Chemical Oxygen Demand (COD) values in the order of 5 000 to 50 000 mg O₂/L, depending on operational conditions and solvent fraction. The presence of residual surfactants may increase colloidal stability and shift the acid threshold to higher doses; elevated alkalinity may reduce bulk pH sensitivity without preventing threshold destabilisation, thereby reinforcing the advantage of viscosity-based control.

In an embodiment, the epoxy resin in the effluent is present in one or more physical states selected from: (i) liquid epoxy oligomer droplets dispersed in water, (ii) emulsions stabilised by residual surfactants and/or amines, (iii) partially cured resin fragments, microgels or particulate material originating from washing operations, and (iv) hybrid resin-solid particles containing fillers or pigments.

In an embodiment, the thickening observed during flocculation is explicitly a physical thickening due to floc formation and percolation, rather than covalent curing. The process does not introduce bifunctional curing agents, and the acid acts as a colloidal destabiliser rather than as a curing reagent.

In an embodiment, the size distribution of resin flocs formed in the reactor is treated as a critical parameter for downstream transfer and separation performance. Flocs that are too small may be entrained and reduce retention efficiency; flocs that are too large may cause bridging, blockage or unstable discharge behaviour.

In an embodiment, the floc size may be measured by microscopy and image analysis, by laser diffraction where applicable, and/or by wet sieving for coarse fractions. In a preferred embodiment, stable operation is obtained when the median floc size D50 is within about 0.3 to 2 mm, with a typical distribution spanning approximately 0.1 to 5 mm. Floc size is adjusted by controlling mixing intensity (e.g., impeller speed or G-value), dosing rate and residence time. Excessive mixing intensity may shear and break flocs (reducing D50), whereas insufficient mixing may cause irregular coalescence and formation of oversized heterogeneous agglomerates.

In an embodiment, the thermal performance of the thermoevaporator is supported by defining relevant thermophysical parameters of the treated medium. Since the mixture is water-dominant, the heat capacity of the effluent may be approximated in the range of about 3.5 to 4.2 kJ/kg·K. The latent heat of vaporisation of water is on the order of 2 257 kJ/kg, thereby dominating energy demand.

In a preferred embodiment, the thermal conductivity of the thickened resin-containing medium is lower than that of water, increasing thermal resistance and potential fouling risk. Accordingly, the thermoevaporator may comprise scraping, conveying, or surface renewal mechanisms to maintain heat transfer and to limit formation of insulating resin crusts. Discharge of the resin-containing residue is preferably achieved by gravity and/or by mechanical conveying, optionally assisted by self-cleaning shut-off elements, thereby reducing risk of blockage even in the presence of large agglomerates.

In an embodiment, the system comprises instrumentation to record at least: temperature (reactor and evaporator), flow rates (feed, discharge and acid dosing), and a viscosity proxy signal (agitator torque, current or power). The control system preferably logs these parameters over time and identifies the threshold point of flocculation by detecting either (i) a predetermined relative increase in torque/current (+50% to +120% relative to baseline), or (ii) a predetermined torque/current plateau indicating that the target thickening has been achieved. This embodiment enables reproducible operation across variable effluent compositions without relying on bulk pH as the control target.

In an embodiment, microbiological performance claims relating to recovered water quality are supported by comparative microbiological assays performed on defined sampling points of the process. Samples may include: A0 (raw effluent), A1 (after flocculation, where a separable aqueous fraction exists), A2 (condensate after thermoevaporation prior to filtration), and A3 (final recovered water after filtration, e.g., activated carbon or equivalent).

Microbiological indicators preferably include heterotrophic plate count (HPC), total coliforms and *Escherichia coli* as a faecal indicator. Optionally, *Enterococcus spp.* and/or *Pseudomonas aeruginosa* are additionally evaluated where industrial reuse requirements justify such indicators. Results are reported as CFU/mL or CFU/100 mL, with detection limits stated, and performance is expressed as log₁₀ reduction between A0 and A2 and/or A3.

In a preferred embodiment, the thermoevaporation and condensation step provides a combined thermal and phase-change barrier to microbial transfer into the recovered water. Comparative assays show that the microbial load in the condensate is significantly reduced relative to the raw effluent.

In another embodiment, log reductions of at least about 4 to 6 log₁₀ for vegetative bacteria are observed between A0 and A2, depending on effective time-temperature exposure and system configuration. Subsequent filtration contributes to removal of particulates and stabilisation of final water quality, with the final recovered water A3 exhibiting low microbial counts and/or non-detectable levels of E. coli within the assay detection limits.

In an embodiment, the stability of recovered water is evaluated by storing the condensate and/or filtered water under controlled conditions (e.g., in a storage tank) for 24 to 72 hours, followed by repeated microbiological testing to assess regrowth potential.

In an additional or alternative embodiment, system hygiene robustness is validated by monitoring biofilm formation on tank or piping surfaces over time and/or by assessing microbial counts before and after cleaning-in-place (CIP) procedures. Such tests support claims that recovered water quality can be maintained under industrial reuse conditions when appropriate hygienic operation is applied.

### Experimental Example 1

In a representative example, an industrial effluent originating from the cleaning of epoxy resin application equipment was collected in a reception tank. The effluent exhibited the following average initial characterisation: pH of 7.4; viscosity of 35 mPa·s; turbidity of 3,200 NTU; chemical oxygen demand (COD) of 18,000 mg O₂/L; dispersed epoxy resin content of approximately 3% by weight; and resin state corresponding to a mixture of dispersed liquid epoxy oligomers and partially cured epoxy particles. The effluent was transferred to a reactor equipped with a mechanical agitator and a frequency converter, and agitation was initiated at ambient temperature of approximately 22 °C. An aqueous hydrochloric acid solution was then added progressively by means of a dosing pump until a total acid concentration of 3.5 ppm relative to the effluent volume was reached. During acid addition, a rapid increase in agitator motor load was observed, together with an increase in the viscosity of the medium to approximately 600 mPa·s. Visible formation of dense epoxy resin flocs having an average size between 0.5 and 1.5 mm was also observed. Acid dosing was automatically stopped when the motor torque reached a predefined threshold value, without requiring any further acid addition. This example demonstrates that effective flocculation can be achieved using extremely low acid concentrations, without the need for stoichiometric neutralisation or global pH adjustment of the effluent.

### Experimental Example 2

In another embodiment, the flocculated effluent obtained in Experimental Example 1 was transferred to a thermoevaporator equipped with a heating jacket. The system was operated at a controlled internal temperature between 105 and 110 °C under continuous evaporation conditions. During operation, the water present in the effluent underwent a phase change to vapour, while the flocculated epoxy resin and other non-volatile constituents remained in the solid phase. The solid residue was discharged by gravity at the bottom of the evaporator. The water vapour was conveyed to a condensation tank, where it was condensed back into liquid form. The condensed water exhibited a turbidity below 15 NTU, a COD below 800 mg O₂/L, and no detectable epoxy resin by gravimetric analysis. This example confirms that separation of epoxy resin and water occurs by physical phase change of the water, without chemical degradation of the resin.

### Experimental Example 3

In another embodiment, comparative microbiological assays were performed on samples corresponding to: A0 (raw effluent), A2 (condensed water after thermoevaporation), and A3 (final water after filtration through activated carbon). The analysed parameters included heterotrophic plate count, total coliforms, and *Escherichia coli.* The results showed a reduction greater than 5 log₁₀ in microbial counts between A0 and A2, as well as the absence of detectable *E. coli* in the final water A3. In addition, microbiological stability of the recovered water was observed during controlled storage. These results confirm that the thermoevaporation step acts as both a thermal and physical barrier to the transfer of microorganisms into the recovered water, with the subsequent filtration step contributing to stabilisation of final water quality.

### Experimental Example 4

In another embodiment, the water obtained in Experimental Example 2, after filtration, was reused in non-critical industrial operations, including floor washing and technical irrigation of green areas. No occurrence of odours, deposits, or observable adverse effects was detected during reuse, supporting the suitability of the recovered water for non-critical reuse applications.

Figure 1 evidences an embodiment of the present disclosure, focusing on the efficient separation of water from the epoxy resin and other constituents present in the effluent.

In an embodiment, the effluent, which contains water (in liquid form), epoxy resin and other constituents, is taken to a reception tank (1). From this point, the effluent is transferred to the reactor (2), where the actual treatment begins.In an embodiment, in the reactor (2), a flocculating agent, hydrochloric acid (HCl), held in a container (3), is added in a controlled manner by a dosing pump (4). The concentration of HCl used and effective varies between 2 and 5 ppm, and although it can be used above 5 ppm, the effectiveness of the process is not significantly altered. The selection of this concentration ensures that, even if there is a small loss of acid concentration during storage, the treatment is efficient and manages to separate 99% of the water from the epoxy resin and other constituents.

In an embodiment, in the reactor (2), a motor with paddles, namely a mechanical agitator (5), performs mechanical agitation, ensuring that the HCl (3) and the effluent mix, facilitating the development of agglomerates, causing the flocculation process to occur, allowing the physical state to change from a liquid and low viscous medium to a medium with high viscosity.

In an embodiment, the flocculation process is monitored by a frequency inverter in the control box (6), which adjusts the operation of the motor according to the viscosity of the mixture. When the viscosity increases due to flocculation, the motor exerts more effort, which signals the system to close the HCl (3) dosing pump (4), stopping the addition of the flocculating agent, HCl (3), in order to make the process more economical and safer.

In an embodiment, at the bottom of the reactor (2), a gate valve (7), namely guillotine valve, controls the flow of flocculated effluent which is directed to the thermo-evaporator (8). The guillotine valve (7) enables self-cleaning, which is essential for effluents and media containing epoxy resins, since the central guillotine blade, by collecting (opening the passage), will then allow it to be scraped off as it passes through the seals.

In an embodiment, the third stage of the method of processing takes place in the thermo-evaporator (8), an essential piece of equipment for physically separating the water from the epoxy resin and other constituents, through the difference in the phase change point of the water compared to the other constituents.

In an embodiment, the thermo-evaporator (8) is equipped with a jacket heating system (9), which ensures that the internal temperature remains above 105 °C. This causes the water to evaporate, i.e., change its physical state to a gaseous state, allowing the physical separation of the water from the resin and other constituents, which are in a solid state. The heating system of the thermo-evaporator (8) can be powered by both electrical and thermal sources, using reused thermofluids from heat losses or steam from the industry itself, and can also be supplemented by solar thermal panels.

In an embodiment, at the end of the thermo-evaporator system (8), there is a combined unit or zone with gravity discharge (10) and a vertical outflow (11), where the gaseous effluent is led to another zone in the process. The solids can then be reused in the epoxy resin manufacturing and use industry.

In an embodiment, after the physical separation carried out in the thermo-evaporator (8), the water in the gaseous state is led to a condensation tank (12) via an extraction fan (13) to improve the separation efficiency. The condensation tank (12) consists of a spray system (14), where the water condenses and returns to a liquid state. This condensation process is crucial for water recovery.

In an embodiment, the condensation tank (12) is connected to the heat exchange tank (15), where thermal transmission takes place between the water that has already condensed and the water in liquid form. To ensure the system is operational, the two tanks are connected at the bottom via a conduit (16), which will allow the same level of water to be used in both tanks, so that the water in the heat exchange tank (15) is used to lower the temperature of the water and so that the condensation tank (12) doesn't run out of water. The water, now condensed, is recirculated through a pump (17), returning to the condensation tank (12).

In an embodiment, the system contains a tank connected to the condensation tank (12) by a conduit (18) in which the condensed water undergoes a filtering process (19), by an activated carbon filter or other, in order to ensure that no particles accumulate in either the condensation tank (12) or the heat exchange tank (15).

In an embodiment, the system is equipped with a float valve (20) or similar, which monitors the water levels in the tanks, placed in the heat exchange tank (15). When the water level reaches the pre-set value, the float valve (20) is activated to release the water for reuse in industry.

In an embodiment, the final pH of the treated water is between 4 and 5, which is crucial for guaranteeing the efficiency of the process and ensuring that the resulting water is completely clean and free of contaminants. This makes the water suitable for various applications, such as industrial processes and even irrigation, promoting circularity and sustainability in the use of water resources.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. System for processing an effluent containing epoxy resin, comprising:
a reception tank (1) configured to collect the effluent;
a flocculation reactor (2) linked to the reception tank (1);
a container (3) containing a flocculant agent;
a dosing pump (4) linked to the container (3) and the reactor (2), wherein the dosing pump (4) is configured to introduce the flocculant agent from the container (3) into the reactor (2);
a mechanical agitator (5) positioned within the reactor (2);
a control unit box (6) configured to control the mechanical agitator by measuring the viscosity (5);
a guillotine/gate valve (7) with seals at the basis of the reactor (2) configured to self-cleaning and discharge, arranged at the bottom of the reactor (2);
a thermo-evaporator (8) linked to the guillotine/gate valve (7) configured to separate the water from the epoxy resin and other effluent components;
a heating system (9) positioned around the thermo-evaporator (8) for water evaporation;
a unit combining a gravity discharge outlet (10) and a vertical outflow (11) for gas exit linked at the end of the thermo-evaporator (8);
a vapour conveying system (11) connected to a condensation tank (12);
a condensation tank (12), with a condensation system for recovering water;
an extraction fan (13) linked to the vertical outflow (11) and the condensation tank (12);
a spray system (14) positioned within the condensation tank (12) configured for water recovery;
a heat exchange tank (15) for thermal transmission;
a first conduit (16) connected to the condensation tank (12) and the heat exchange tank (15) to ensure the balance of water levels;
a water recirculating pump (17) between the condensation tank (12) and the heat exchange tank (15);
optionally, a second conduit (18) linked to the condensation tank (12);
optionally, a filtration unit (19) linked to the condensation tank (12) through the second conduit (18);
a float valve (20) within the heat exchange tank (15) that monitors the water levels;
wherein the system is configured to automatically stop the addition of the flocculating agent when the viscosity-representative parameter reaches a predefined threshold corresponding to loss of colloidal stability of the epoxy resin,
without inducing chemical curing of the resin.

2. System according to the previous claim, wherein the flocculant agent is an acid; preferably strong inorganic acid, more preferably wherein the flocculant agent is selected from a list consisting of: hydrochloric acid (HCl), sulfuric acid (H₂SO₄), and nitric acid (HNO₃); even more preferably hydrochloric acid (HCl).

3. System according to any of the previous claims, wherein the flocculant agent concentration ranges from 1-10 ppm; preferably 2-8 ppm; more preferably 2-5 ppm.

4. System according to any of the previous claims, wherein the flow rate of the flocculant agent ranges from 0.1 L/h to 10000 L/h; preferably 10 L/h to 500 L/h, wherein the control unit (6) is configured to interrupt dosing of the flocculating agent when the viscosity-representative parameter increases by 50% to 120% relative to a baseline value measured prior to acid addition.

5. System according to any of the previous claims, wherein the effluent comprises:
0.1-15 % (w/w) of a dispersed epoxy resin and/or epoxy oligomers;
70-99 % (w/w) of water;
0-10 % (w/w) of organic solvents;
a turbidity ranging from 1 000 - 5 000 NTU;
a chemical oxygen demand ranging from 8 000 - 25 000 mg O₂/L;
200 - 2 000 mg/L of suspended solids;
500 - 5 000 mg/L of oils and/or resins;
a viscosity ranging from 20 - 50 mPa·s;
a conductivity ranging from 0.5-10 mS/cm; and
wherein the effluent is dispersed in colloidal or emulsified form.

6. System according to any of the previous claims, wherein the interval of speed of the mechanical agitator ranges from 5 rpm to 10000 rpm.

7. System according to any of the previous claims, wherein the flow rate of flocculated effluent from the reactor (2) to the thermo-evaporator (8) ranges from 0.1 m³/h to 500 m³/h; preferably 100 m³/h to 500 m³/h.

8. System according to any of the previous claims, wherein the temperature of the heating system is at least 100 °C; preferably 105 °C.

9. System according to any of the previous claims, wherein the recovered water has a reduction of at least 4 log₁₀ in microbial count compared to the effluent; wherein the microbial count is determined based on one or more heterotrophic plate count, total coliforms, *Escherichia coli, Enterococcus spp,* or *Pseudomonas aeruginosa.*

10. Method for processing an effluent containing epoxy resin, comprising the steps:
providing the effluent;
introducing the effluent into the reception tank (1);
transferring the effluent from the reception tank (1) to the reactor (2);
adding the flocculant agent to the effluent in the reactor (2), until the viscosity increases at least 50% and up to 120% relative to an initial baseline value;
agitating mechanically the effluent and the flocculant agent in the reactor (2);
monitoring the viscosity of the mixture by the control box (4);
stopping the addition of the flocculant agent when the desired viscosity is reached;
transferring the flocculated effluent to a thermo-evaporator (8);
recovering the epoxy resin and other components trough the gravity discharge outlet (10);
transferring the gaseous effluent to the condensation tank (12) via the vertical outflow (11);
condensating the water in the condensation tank (12)
controlling the water levels and condensation process in the heat exchange tank (15);
optionally, filtrating the condensated water in the filtration unit (19);
recovering of the water via the float valve (20); and
wherein epoxy resin is not detectable in the recovered water by gravimetric analysis; and
wherein flocculation of the epoxy resin is physical and reversible, and no chemical curing or gelation of the epoxy resin occurs.

11. The method according to claim 10, wherein the acid is added in a concentration ranging from 2 to 5 ppm, corresponding to a colloidal destabilisation threshold.

12. Method according to the previous claims 10 to 11, wherein the water pH is from 2-10; preferably 3-6; more preferably 4-5.

13. Method according to any of the previous claims 10 to 12, wherein percentage of water recovered is 10-100%; preferably 10-50%; more preferably 50-95%, wherein epoxy resin is not detectable in the recovered water by gravimetric analysis.

14. Method according to any of the previous claims 10 to 13, wherein the flocculation reactor residence time ranges from 2-20 minutes; preferably 5-10 minutes.

15. Use of water obtained by the method according to any of the previous claims 10 to 14 for industrial reuse or technical irrigation.
